# EUROPEAN PATENT SPECIFICATION

(11) **EP 3 611 578 B1**
(45) Date of publication and mention of the grant of the patent: **06.04.2022**
(21) Application number: 18189025.2
(22) Date of filing: 14.08.2018
(51) Int. Cl.: G05B 13/02, G05B 19/042

(54) **INDUSTRIAL PC DEVICE AND METHOD FOR OPERATING AN INDUSTRIAL PC DEVICE**
INDUSTRIELLE PC-VORRICHTUNG UND VERFAHREN ZUM BETREIBEN EINER INDUSTRIELLEN PC-VORRICHTUNG
DISPOSITIF DE PC INDUSTRIEL ET PROCÉDÉ DE FONCTIONNEMENT D'UN DISPOSITIF DE PC INDUSTRIEL

(43) Date of publication of application: 19.02.2020
(73) Proprietor: OMRON Corporation, Shiokoji-dori, Shimogyo-Ku Kyoto-shi Kyoto 600-8530 (JP)
(72) Inventor: NASER, Mohammad, 5234 GM 's-Hertogenbosch (NL); KNAAP, Dingeman, 5234 GM 's-Hertogenbosch (NL)
(74) Representative: Horn Kleimann Waitzhofer Patentanwälte PartG mbB

(56) References cited:
- EP-A1- 3 319 016
- US-A1- 2013 125 117
- US-A1- 2017 031 343
- US-A1- 2017 285 584
- US-A1- 2018 210 406

## Description

The present invention relates to an industrial personal computer (industrial PC or IPC) device. Further, the present invention relates to a method for operating an IPC device.

IPC devices are often used in industrial environments to control an operation of a physical factory device. Some IPC devices are capable of analyzing sensor data or the like from the physical factory device in order to optimize the control and operation of the physical factory device.

The document US 2017/0091791 A1 discloses a digital power plant comprising a digital model of a power generation system including digital models of physical powerplants. The digital power plant includes a machine learning engine for reconfiguring the digital models based on data about the operation of the physical powerplants.

US 2017/031343 A1 discloses a machine tool provided with an operation evaluation section that outputs evaluation data on an operation of the machine tool and a machine learning device that performs machine learning of a movement amount of an axis. The machine learning device calculates a reward from physical-amount data on the machine tool and the evaluation data, performs adjustment of the movement amount of the axis based on a machine learning result of the adjustment of the movement amount of the axis and the physical-amount data, and performs the machine learning of the adjustment of the movement amount of the axis based on the adjusted movement amount of the axis, the physical-amount data after the operation of the machine tool based on the movement amount of the axis, and the reward.

EP 3 319 016 A1 discloses a control system receiving data indicative of a plurality of observations of an environment. Machine learning using deep reinforcement learning is applied to determine an action based on the observations. The action is applied to the environment. A reward token indicative of alignment between the action and a desired result is received. A policy parameter of the control system is updated based on the reward token. The updated policy parameter is applied to determine a subsequent action responsive to a subsequent observation.

US 2013/125117 A1 discloses an arrangement for using a resource of a hardware platform with at least two virtual machines, wherein a virtualization controller for administering the virtual machines executes on the hardware platform, a first machine of the virtual machines with a first operating system executes separately on a first processor core or a first processor, and further virtual machines execute on a further processor core or processor.

It is one object of the present invention to provide an improved IPC device. A further object of the present invention is the provision of an improved method for operating an IPC device.

The invention is set out in the appended set of claims.

According to a first aspect, an industrial personal computer (IPC) device is provided. It comprises means for executing:
a real time operating system (RTOS);
a general-purpose operating system (GPOS);
a control application running within the RTOS for generating control data and controlling an operation of a physical factory device in accordance with the generated control data;
a digital twin running within the GPOS for providing a digital copy of the physical factory device including a virtual control application for generating virtual control data and a simulation application for simulating an operation of the physical factory device when it is controlled with the virtual control data using the digital twin;
a real-time artificial intelligence (AI-R) application interacting with the control application for executing a first artificial intelligence algorithm, the first artificial intelligence algorithm receiving physical factory device data and the control data as an input and providing first modification data as an output, wherein the physical factory device data includes data indicative of the operation of the physical factory device, and wherein the control application is configured to modify the control data as a function of the first modification data; and
a general-purpose artificial intelligence (AI-G) application interacting with the digital twin for executing a second artificial intelligence algorithm, the second artificial intelligence algorithm using digital twin data and the virtual control data as an input and providing second modification data as an output, wherein the digital twin data includes data indicative of the simulation of the physical factory device using the digital twin, and wherein the virtual control application is configured to modify the virtual control data as a function of the second modification data.

The AI-R application may perform testing in the real system comprising the physical factory device while the AI-G application may perform testing in the virtual system comprising the digital twin representing the physical factory device. In particular, the IPC device executes two parallel learning processes, thereby improving the control and operation of the (real) physical factory device.

The IPC device can be an IPC used in an industrial environment. It can be used to control the physical factory device. The physical factory device may be a machine and/or can be part of a production system or the like.

The IPC device may comprise at least two separate operating systems, being the RTOS and the GPOS. The RTOS can serve real-time applications which process data in real-time, as it comes in. The RTOS may be used to control machinery and industrial systems, in particular the physical factory device. To control the physical factory device, the RTOS may include the control application. The RTOS may manage the resources of a computer so that a particular operation executes in precisely the same amount of time, every time it occurs.

The GPOS may be used to handle operator interfaces, databases, and general-purpose computing tasks. Examples for a GPOS are Apple OS X, Linux and Microsoft Windows. The GPOS can serve applications which do not process data in real-time. The RTOS and the GPOS can be part of different virtual machines of the IPC device.

The control application may generate the control data for controlling the operation of the physical factory device. The control application can be considered as a machine controller, for example. The control data can provide indications on durations of specific processes, parameter settings and other indications which are useful for the operation of the physical factory device. The control application may run on the RTOS. In some embodiments, the control application is located on the same virtual machine as the RTOS.

During operation, the physical factory device can be described by physical factory device data indicating how the physical factory device operates. The physical factory device data may for example be sensor data obtained from sensors located near or on the physical factory device.

The digital twin can be a virtual, digital representation of the physical factory device. In some embodiments, the digital twin is located on the same virtual machine as the GPOS. The digital twin can run on the GPOS. It can include a simulation application and a virtual control application. The virtual control application can be considered as a mapping of the control application in the GPOS environment. In particular, it can generate virtual control data for controlling the (virtual) digital twin. The simulation application may simulate the operation of the physical factory device using the digital twin. In such a simulation, the digital twin may receive the virtual control data from the virtual control application and simulate the operation of the physical factory device if the physical factory device was controlled with the virtual control data. The simulation of the physical factory device using the twin device may be considered as a virtual mapping of the physical factory device in a virtual environment.

The AI-R application can execute the first artificial intelligence (AI) algorithm such as to provide a first learning cycle within the IPC device. Namely, the AI-R application may evaluate the data received as an input (physical factory device data and control data) using the first AI algorithm to generate first modification data as an output. The first modification data may in turn be used by the control application to modify the control data, in particular to update and/or optimize the control data. That way, the operation of the physical control device controlled with the (modified) control data can be modified, in particular updated and/or optimized. The AI-R application may be considered as forming a first optimization loop with the control application.

In parallel to this first learning cycle, the AI-G application may execute the second AI algorithm within the IPC device. The AI-G application may evaluate the data received as an input (digital twin data and virtual control data) using the second AI algorithm to generate second modification data as an output. The second modification data may in turn be used by the virtual control application to modify the virtual control data, in particular to update and/or optimize the virtual control data. That way, the (virtual) operation of the physical control device simulated with the digital twin and controlled with the (modified) virtual control data can be modified, in particular updated and/or optimized. The AI-G application may be considered as forming a second optimization loop with the virtual control application.

The (first and second) AI algorithms can be machine learning algorithms, such as neural networks. They can be supervised or unsupervised learning algorithms. The AI algorithms may also be algorithms based on decision trees, on the hidden Markov model, on the nearest neighbor approach, on hierarchical methods, on linear regression methods and the like.

The learning cycle of the AI-R application can relate to the real physical factory device, while the learning cycle of the AI-G application can relate to the virtual representation thereof by the digital twin. The learning cycle relating to the real physical factory device can be implemented using the RTOS in real time, while the learning cycle relating to the digital twin can be implemented using the GPOS in non-real time. The AI-R application may perform testing in the real system comprising the physical factory device while the AI-G application may perform testing in the virtual system comprising the digital twin representing the physical factory device. In particular, the IPC device executes two parallel learning processes to obtain modification data for modifying control data.

In some embodiments, the control of the physical factory device can be optimized using both learning cycles with the AI-G application and the AI-R application. In that case, the operation of the physical factory device may also be optimized using both learning cycles with the AI-G application and the AI-R application. Thereby, an improved IPC device is provided.

The optimization of the control data in particular indicates a modification of the control data such that the physical factory device data describing the operation of the physical factory device controlled with the modified control data comes closer to predetermined optimal data indicative of an optimal operation of the physical factory device.

According to an embodiment,
the AI-G application is further configured to transmit the second modification data to the AI-R application;
the AI-R application is further configured to provide at least part of the received second modification data to the control application and/or to reject the second modification data; and
the control application is configured to modify the control data as a function of at least part of the second modification data.

The AI-G application and the AI-R application may perform crosstalk including the transmission of the second modification data and/or of feedback data described further below. The second modification data may be used in the "real" system to modify the control data of the physical factory device. The control data of the physical factory system may thus be modified, in particular optimized, in view of at least parts of the first and/or second modification data. Thereby, the operation of the physical factory device can be improved further. Further, the flexibility of the IPC device may be increased because the control data can be modified as a function of the first and/or second modification data.

In detail, the AI-R application receiving the second modification data may decide whether to accept and partially or entirely use the second modification data for modifying the control data or to refuse the second modification data and not use it at all to modify the control data. The safety of the IPC device and of the physical factory device can be improved by the verification of the second modification data by the AI-R application.

According to a further embodiment, the AI-R application is further configured to send feedback data to the AI-G application indicative of whether the second modification data was partially used to modify the control data, entirely used to modify the control data and/or rejected. The feedback data may for example be used by the AI-G application to modify the second AI algorithm. Thereby, the second AI algorithm may be improved.

According to a further embodiment, the simulation application is further configured to simulate an operation of the physical factory device when it is controlled with the modified virtual control data using the digital twin, and the AI-G application is further configured to determine whether the second modification data should be transmitted to the AI-R application based on a result of the simulation of the operation of the physical factory device when it is controlled with the modified virtual control data using the digital twin.

Before transmitting the second modification data to the AI-R application, the AI-G application may perform a simulation of the operation of the physical factory device when it is controlled with the modified virtual control data modified with the second modification data. Depending on a result of this simulation, in particular if the simulation result is good and/or within a specific range, the AI-G application may decide to send the second modification data to the AI-R application. Alternatively, if for example the simulation result is bad and/or outside the specific range, the AI-G application may decide to not send the second modification data to the AI-R application. In the latter case, the second modification data can be discarded.

Further, in some embodiments, the first and/or second modification data may be stored in a storage unit irrespective of whether they are used to modify the control data or not.

According to a further embodiment, the AI-G application is further configured to modify the digital twin so as to better represent the physical factory device based on the feedback data and/or based on the first modification data. The digital twin may be modified so as to improve the learning process using the digital twin and the AI-G application.

According to a further embodiment, the AI-R application and/or the AI-G application are provided on an extension card that is insertable into the IPC device, preferably on a PCI express card. In particular, the extension card is removable insertable into the IPC device.

The extension card may provide the AI-R application and the AI-G application on an AI-layer of the IPC device. The extension card can be added to the IPC device, in particular to an existing IPC device, as an extension, thereby providing the IPC device with the double-learning functionality provided by the AI-R and AI-G applications.

According to a further embodiment, the IPC device comprises two separate learning cycles for modifying the operation of the physical factory device, one of the learning cycles being executed in interaction with the RTOS using the AI-R application so as to comply with industrial real-time operation requirements, and the other learning cycle being executed in interaction with the GPOS using the AI-G application independently from the industrial real-time requirement.

According to a further embodiment, the physical factory device can be operated by being exposed to a high risk characterized by a high risk factor or by being exposed to a low risk characterized by a low risk factor that is lower than the high risk factor, wherein the first artificial intelligence algorithm is a low risk artificial intelligence algorithm which provides first modification data that exposes the physical factory device controlled by control data modified as a function of the first modification data to the low risk, and wherein the second artificial intelligence algorithm is a high risk artificial intelligence algorithm which provides second modification data that exposes the digital twin simulating the physical factory device controlled by control data modified as a function of the second modification data to the high risk.

In detail, all modifications of control data that could theoretically expose the physical factory device to a high risk are tested on the virtual system by the digital twin. In particular, high risk operations of the physical factory device are always tested with the digital twin. Only if this test indicates that an operation of the physical factory device using such risky control data is safe, the second modification data are validated and used to modify the control data of the real physical system. An operation of the physical factory device at high risk can thereby be avoided, thereby improving the security of the physical factory device.

According to a further embodiment, the control application is configured to:
incrementally partially modify the control data as a function of the first and/or second modification data by performing a partial modification of the control data, in which the control data is only partially modified as a function of the first and/or second modification data;
determine whether the physical factory device data of the physical factory device controlled with the partially modified control data is located within an allowable range;
if it determines that the physical factory device data of the physical factory device controlled with the partially modified control data is located within an allowable range, repeating the steps of partially modifying the control data and of determining whether the physical factory device data of the physical factory device controlled with the partially modified control data is located within an allowable range until the control data has been entirely modified as a function of the first and/or second modification data.

In detail, the control data is not modified at once using the first and/or second modification data. Rather, it may be modified slowly, in a step by step fashion. In each step, the control data can be incrementally slightly modified (partial modification) using the first and/or second modification data. After such a slight modification of the control data, the operation of the physical factory device when controlled by this slightly modified control data is verified by determining whether the physical factory device data describing this operation is within the allowable range. Only if the physical factory device data is within the allowable range, the control data is further modified using the first and/or second modification data, still in small steps.

In detail, in each step, the control data is partially modified so that it comes closer to what is prescribed by the first and/or second modification data with each step. The partial modification and the verification of the physical factory device data after each step can be repeated until the control data has been completely modified in accordance with the modification prescribed by the first and/or second modification data.

If the physical factory device data is outside of the allowable range after one of the steps, the entire modification of the control data using the first and/or second modification data may be stopped and the control data may be reset to its value prior to the modification based on the first and/or second modification data. An incorrect operation of the physical factory device, indicated by the physical factory device data falling outside of the allowable range, can thus be prevented.

According to a further embodiment, the control application is configured to restart the modification of the control data as a function of the first and/or second modification data differently from an initial modification of the control data as a function of the first and/or second modification data if the control application determines that the physical factory device data of the physical factory device controlled with the partially modified control data is located outside of the allowable range during the initial modification.

The modification of the control data using the first and/or second modification data can be restarted if the physical factory device data is found to be outside of the allowable range in the initially tried modification of the control data. In a subsequent modification of the control data, the order in which parameters of the control data are modified can be changed, for example. Thereby, the modification suggested by the AI-R application and/or the AI-G application may be applied to the control device in a manner in which the physical factory device data does not leave the allowable range, thereby assuring the correct operation of the physical factory device.

According to a further embodiment,
the virtual control application is configured to generated virtual control data as a function of a received instruction received by the IPC device;
the simulation application is configured to simulate the physical factory device controlled with the virtual control data generated as a function of the received instruction using the digital twin; and
the virtual control application is configured to determine whether the received instruction is safe based on a result of the simulation of the physical factory device controlled with the virtual control data generated as a function of the received instruction from the simulation application.

When the IPC device receives instructions, for example from a user or from an external device, these instructions may be verified using the digital twin. In particular, the impact of such instructions on the operation of the physical factory device can be simulated with the simulation application. In some embodiments, the IPC device only implements the received instructions if the simulation by the digital twin indicates that using the received instructions would be safe. Thereby, the safety of the IPC device and of the physical factory device can be improved.

According to a further embodiment, the AI-G application comprises a plurality of sub-applications each configured to use a different artificial intelligence algorithm to provide second modification results. The second modification results can correspond to the second modification data previously described.

The use of different AI algorithms may be beneficial in that different second modification results can be obtained as propositions for modifying the virtual control data and/or the (real) control data. The control and operation of the physical factory device may be improved in a more efficient manner with a variety of second modification results. Using different AI algorithms may further increase the flexibility of the IPC device.

According to a further embodiment, the AI-G application is configured to combine at least some of the second modification results provided by the plurality of sub-applications to generate second modification data and to transmit the second modification data to the AI-R application.

According to a further embodiment, the first and second AI algorithms are different AI algorithms. The use of two different AI algorithms in the learning cycles can be useful as the best from each AI algorithm can be gathered. The control and operation of the physical factory device may be improved in a more efficient manner with a variety of second modification results.

According to a further embodiment, the first and second AI algorithms are used to generate first and second modification data relating to different functions of the physical factory device, the functions including at least one of: a predictive maintenance of the physical factory device providing a prediction about a maintenance of the physical factory device, a predictive control providing a prediction about a control of the physical factory device, an overall equipment effectiveness and/or a power efficiency prediction providing a prediction about the power efficiency of the physical factory device.

The AI-G and the AI-R may be used to train and/or improve different aspects (functions) of the physical factory device parallelly.

According to a further embodiment, the IPC device further comprises a hypervisor unit for virtually separating the GPOS and the RTOS. The hypervisor unit can be a hypervisor, also called "virtual machine monitor". The hypervisor may further allow the communication between different operating systems, in particular between GPOS and RTOS. Said communication can be a secure communication.

According to a further embodiment, the IPC device comprises a further operating system virtually separated from the GPOS and the RTOS through the hypervisor unit, wherein the AI-G application and the AI-R application are running inside the further operating system. The further operating system may correspond to a further virtual machine.

According to a further embodiment, the extension card is configured to communicate with the RTOS and the GPOS through the hypervisor unit. In particular, the extension card can be virtualized as a host operating system or a virtualized virtual machine communicating with the other operating systems via the hypervisor unit.

The various applications (AI-G application, AI-R application, control application and the like) described herein as well as the digital twin may be implemented as software and/or as hardware.

According to a second aspect, an extension card for the IPC device according to the first aspect or to an embodiment thereof is provided. The extension card comprises the AI-G application and the AI-R application and is insertable into the IPC device. In detail, the IPC device may include a slit to insert the extension card. The extension card may be removably insertable into the IPC device. In particular, the extension card of the second aspect corresponds to the extension card described in embodiments of the first aspect.

According to a third aspect, a factory system comprising the IPC device according to the first aspect or to an embodiment thereof and a physical factory device controlled by the IPC device is provided. The physical factory device can be the above-defined factory device.

According to a fourth aspect, a method for operating an industrial PC (IPC) device comprising means for executing:
a real time operating system (RTOS) and a general-purpose operating system (GPOS) is provided. The method comprises:
generating control data using a control application running within the RTOS;
controlling an operation of a physical factory device in accordance with the generated control data using the control application;
providing a digital copy of the physical factory device as a digital twin running within the GPOS including a virtual control application and a simulation application;
generating virtual control data using the virtual control application;
simulating an operation of the physical factory device using the simulation application when it is controlled with the virtual control data;
executing a first artificial intelligence algorithm using a real-time artificial intelligence (AI-R) application interacting with the control application, the first artificial intelligence algorithm receiving physical factory device data and the control data as an input and providing first modification data as an output, wherein the physical factory device data includes data indicative of the operation of the physical factory device;
modifying the control data as a function of the first modification data;
executing a second artificial intelligence algorithm using a general-purpose artificial intelligence (AI-G) application interacting with the digital twin, the second artificial intelligence algorithm using digital twin data and the virtual control data as an input and providing second modification data as an output, wherein the digital twin data includes data indicative of the simulation of the physical factory device using the digital twin; and
modifying the virtual control data as a function of the second modification data.

In particular, the method for operating the IPC device according to the fourth aspect is operated on the IPC device according to the first aspect or to an embodiment thereof.

The embodiments and features described with reference to the IPC device (first aspect and embodiments thereof) apply mutatis mutandis to the method (fourth aspect), to the factory system (third aspect) and to the extension card (second aspect).

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
- Fig. 1: shows a factory system according to a first embodiment;
- Fig. 2: shows a method for operating an IPC device according to a first embodiment;
- Fig. 3: shows a method for operating an IPC device according to a second embodiment;
- Fig. 4, 5 and 6: show an example of a modification of control data;
- Fig. 7: shows an example of a method for performing high or low risk learning;
- Fig. 8: shows an example of a method for verifying received instructions;
- Fig. 9: shows an example of an AI-G application
- Fig. 10: shows an embodiment of an IPC device;
- Fig. 11: shows a factory system according to a second embodiment;
- Fig. 12: shows an example of an IPC device;
- Fig. 13: shows an example of a method for installing AI-R and AI-G applications; and
- Fig. 14: shows an example of an allocation of the AI-R application and the AI-G application.

In the Figures, like reference numerals designate like or functionally equivalent elements, unless otherwise indicated.

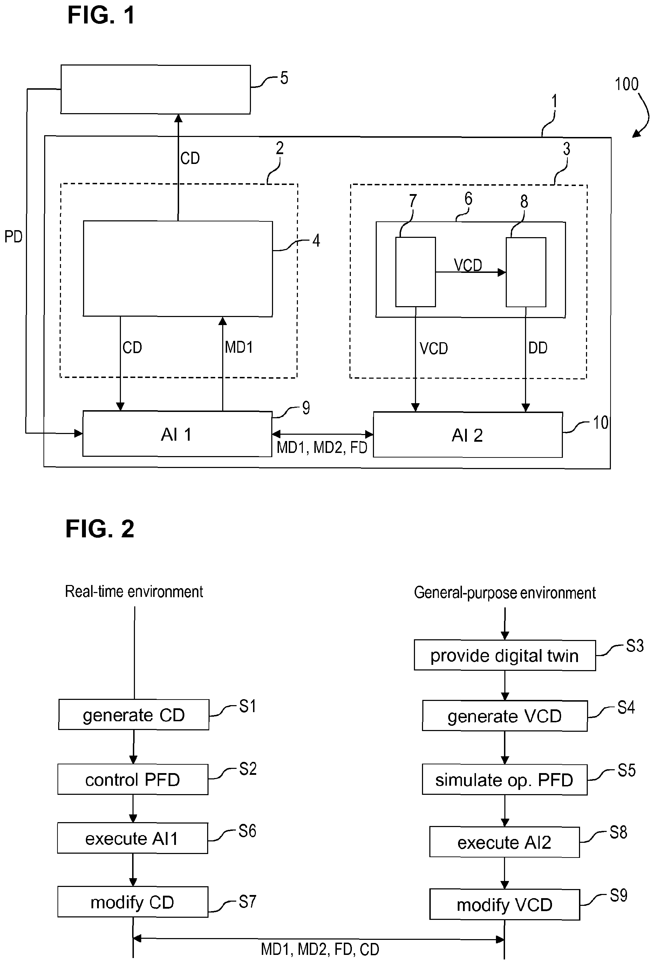

Fig. 1 shows a factory system 100 according to a first embodiment. The factory system 100 comprises an IPC device 1 according to a first embodiment and a physical factory device (PFD) 5 controlled by the IPC device 1. In the present case, the factory system 100 is an automation system for producing products with the physical factory device 5, which is here a machine.

The IPC device 1 includes a RTOS 2, a GTOS 3, an AI-R application 9 and an AI-G application 10. The RTOS 2 and the GPOS 3 are two virtually separated operating systems of the IPC device 1. The RTOS 2 comprises a control application 4 running within the RTOS 2. The GPOS 3 has a digital twin 6 virtually representing the physical factory device 5 running within the GPOS 3. The digital twin 6 includes a virtual control application 7 and a simulation application 8.

The IPC device 1 may be virtually separated into a real-time environment fulfilling the requirements of industrial real-time communication and a general-purpose environment which does not fulfil the requirements of industrial real-time communication. The real-time environment includes the RTOS 2 and the AI-R application 9, while the general-purpose environment includes the GPOS 3 and the AI-G application 10.

The IPC device 1 of the factory system 100 can be operated according to a method for operating an IPC device 1. A first embodiment of such a method is shown in Fig. 2. In the following, the function of the IPC device 1 of Fig. 1 will be described in view of Fig. 1 and 2 together.

In a step S1, the control application 4 generates control data CD. The control data CD is data for controlling the machine 5. It includes indications about how to set specific parameters of the machine 5, when to turn the machine 5 on and off and the like.

In a step, S2, the control application 4 controls the operation of the machine 5 using the control data CD. The control application 4 hereby transmits the control data CD to the machine 5 by means of a bus. The machine 5 then operates in accordance with what the control data CD prescribes. In particular, the machine 5 sets specific parameters in accordance with the parameter values provided by the control data CD. The operation of the machine 5 can be described by physical factory device data (machine data) PD. The machine data PD is sensor data obtained by sensors located on the machine 5.

In parallel thereto, in the general-purpose environment, the digital twin 6 is provided in a step S3 such as to represent the real machine 5. The virtual control application 7 operates in a similar fashion to the control application 4, but in the general-purpose environment. In detail, in a step S4, it generates virtual control data VCD for controlling the digital twin 6. The virtual control data VCD can be generated as a function of the control data CD generated by the control application 4. The simulation application 8 can be executed such as to simulate the operation of the machine 5 as if it was controlled with the virtual control data VCD using the digital twin 6 in a step S5. The result of the simulation of the machine 5 by the digital twin 6 can be described by digital twin data DD.

In a step S6, in the real-time environment, the AI-R application 9 executes a first AI algorithm AI1. Said first AI algorithm AI1 is a neural network algorithm receiving the control data CD and the machine data PD as an input. As an output, the first AI algorithm AI1 generates first modification data MD1. The first modification data MD1 is data which is then used by the control application 4 to modify the control data CD in a step S7. In particular, the first AI algorithm AI1 determines the first modification data MD1 such that it can improve the control of the machine 5 by the control application 4, thereby also improving the operation of the machine 5, for example in terms of efficiency, energy consumption or the like.

In parallel to the step S6, in a step S8, in the general-purpose environment, the AI-G application 10 executes a second AI algorithm AI2. Said second AI algorithm AI2 is a neural network algorithm receiving the virtual control data VCD and the digital twin data DD as an input. As an output, the second AI algorithm AI2 generates second modification data MD2. The second modification data MD2 is data which is then used by the virtual control application 7 to modify the virtual control data VCD in a step S9. In particular, the second AI algorithm AI2 determines the second modification data MD2 such that it improves the virtual control of the machine 5 as simulated with the digital twin 6.

Before or after the steps S7 and S9, the AI-G application 10 and the AI-R application 9 can optionally exchange data such as the control data CD, the virtual control data VCD, the first and/or second modification data MD1, MD2 and/or feedback data FD with each other. This optional exchange of data will be described in detail in the following.

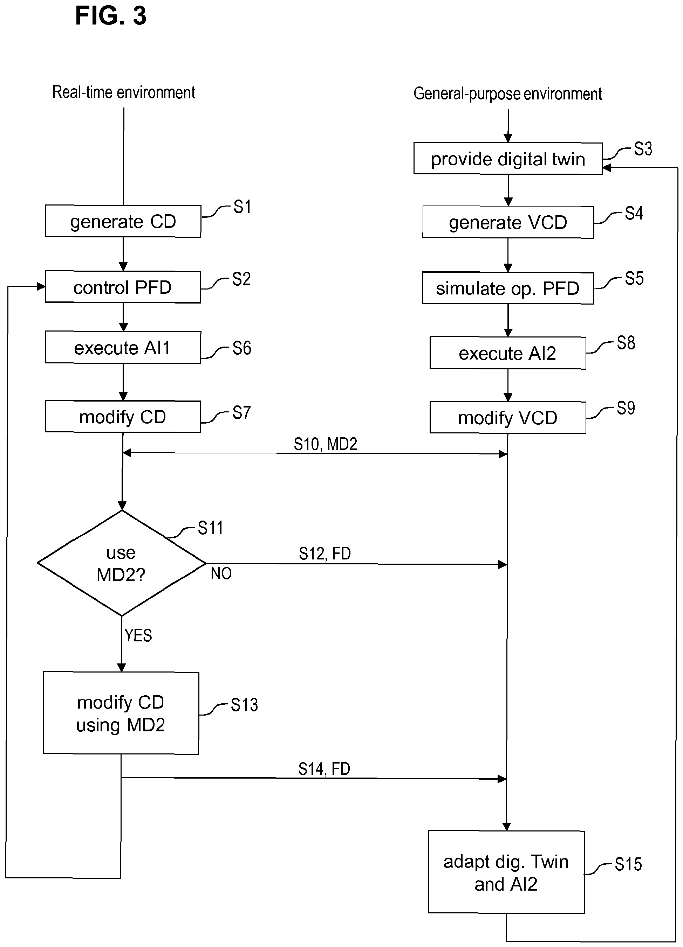

Fig. 3 shows a method for operating an IPC device 1 according to a second embodiment. The method according to the second embodiment differs from the method of the first embodiment of Fig. 2 in that it further comprises steps S10 - S15.

In a step S10, the AI-G application 10 transmits the second modification data MD2 to the AI-R application 9. The AI-R application 9 then determines in a step S11 whether to use the second modification data MD2 for modifying the control data CD or not. This determination can be performed using the first AI algorithm AI1 of the AI-R application 9.

If the AI-R application 9 decides not to use the received second modification data MD2, it sends feedback data FD to the AI-G application 10 indicating that the second modification data MD2 will not be used to modify the control data CD (step S12 of Fig. 3). Alternatively, if the AI-R application decides to (at least partially) use the second modification data MD2, it instructs the control application 4 to modify the control data CD as a function of at least part of the second modification data MD2 (step S13 of Fig. 3).

Once the control data CD has been modified as a function of the second modification data MD2, the AI-R application 9 sends feedback data FD to the AI-G application 10 indicating that the second modification data MD2 was at least partially used to modify the control data CD in a step S14.

In some embodiments, the feedback data FD also comprises an indication as to whether the operation of the machine 5 controlled with the control data CD modified using the second modification data MD2 was indeed improved as compared to prior to the modification. In this case, the AI-R application 9 tests the usefulness of the modified control data CD by controlling the machine 5 with the modified control data CD and observing the machine data PD resulting from such a control.

Having received the feedback data FD, in a step S15, the AI-G application 10 modifies the digital twin 6 and/or the second AI algorithm AI2 in view of the feedback data FD. Thereby, if for example the second modification data MD2 was not useful for the AI-R application 9, the second AI algorithm AI2 can be adapted to avoided looking for modifications which are similar to said rejected second modification data MD2. Thereby, the learning process using the second modification data MD2 can be improved.

The IPC device 1 is thus capable of performing two parallel learning processes - one in the real-time environment and one in the general-purpose environment. Thereby, the control and the operation of the machine 5 can be improved in a more efficient manner.

The order of the steps S1 - S15 of the methods shown in Fig. 2 and 3 can be modified. Further, before sending the second modification data MD2, the usefulness of the second modification data MD2 can be tested using the AI-G application 10. In detail, the control of the machine 5 with virtual control data VCD modified using the second modification data MD2 can be simulated using the digital twin 6, and the result of said simulation can be analyzed by the AI-G application 10. The second modification data MD2 may be sent to the AI-R application 9 only if the AI-G application 10 determines that the simulation result is good. Otherwise, the second modification data MD2 is for example stored in a storage unit (not shown).

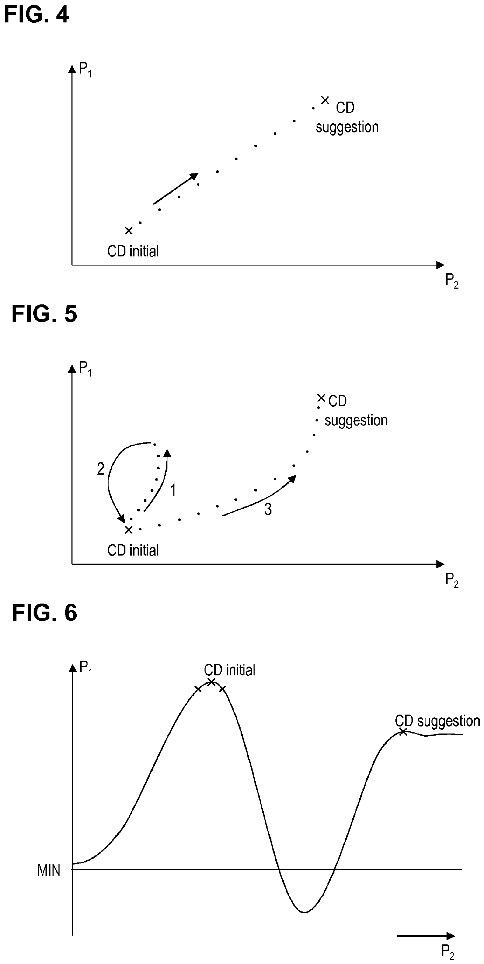

Fig. 4, 5 and 6 show an example of a modification of control data CD as a function of second modification data MD2 (corresponding to step S13). The control data CD could be modified as a function of the first modification data MD1 (corresponding to step S7) or as a function of both the first and second modification data MD1, MD2 along the same lines.

As shown in Fig. 4, the initial control data CD is defined by two parameters P₁ and P₂. In a real system, the control data CD could be defined by many more parameters, but to simplify the representation, it only depends on two parameters P₁ and P₂ here. The control data CD which is modified by the second modification data MD2 is indicated as "CD suggestion" and is also characterized by the two parameters P₁ and P₂, the values of which are both modified (here, increased) as compared to those of the initial control data CD.

To modify the initial control data CD and obtain the modified control data CD, the control application 4 may perform a step by step optimization. In Fig. 4 and 5, each step is indicated by a dot. In each step, the control data CD is slightly modified so that the parameters P₁ and P₂ come closer to the parameters P₁ and P₂ suggested by the second modification data MD2. After each slight modification of the control data CD, the control application 4 verifies that the machine data PD of the machine 5 operated with the modified control data CD is within an allowable range. The allowable range is shown in Fig. 6 as being everything above the minimum line "MIN".

If the machine data PD is determined as being within the allowable range, the control data CD is further modified as a function of the second modification data MD2, until the parameters P₁ and P₂ reach the values prescribed by the second modification data MD2. However, if the machine data PD is determined to be outside the allowable range after one of the modifications, the parameters P₁ and P₂ of the control data CD are reset to their initial values (arrows number 1 and 2 of Fig. 5) and the modification of the control data CD as a function of the second modification data MD2 is restarted in a different manner, following a different path in which the parameters P₁ and P₂ are modified to a different extend and in a different order (arrow number 3 in Fig. 5). This step by step modification of the control data CD allows a controlled modification of the operation of the machine 5 in which the machine 5 is not exposed to any unnecessary risks and continuously operated in a correct manner.

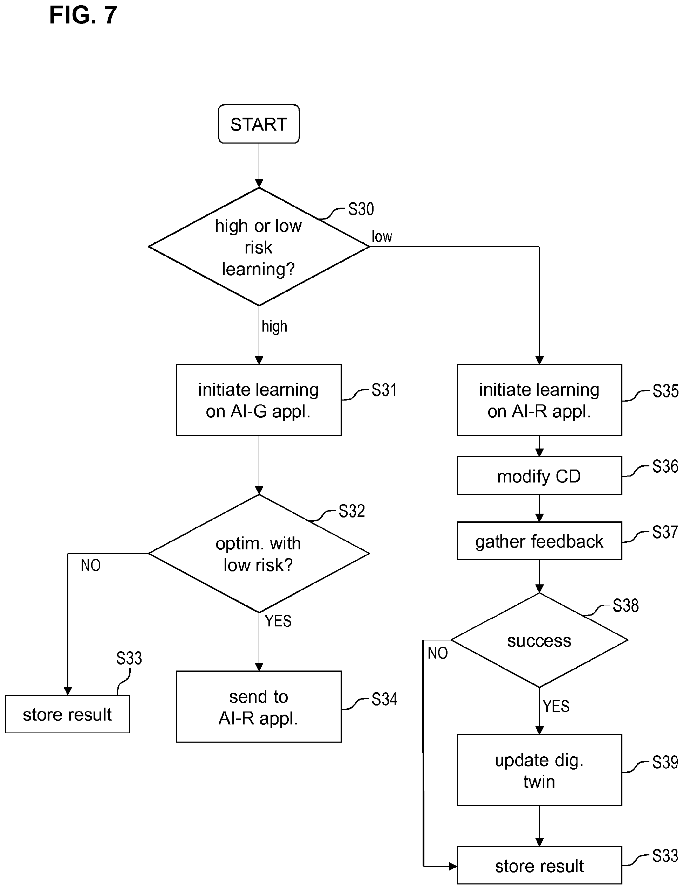

Fig. 7 shows an example of a method for performing high or low risk learning with the IPC device 1. Said method can be part of the methods for operating the IPC device 1 described in view of Fig. 2 and 3.

In a step S30 of Fig. 7, the IPC device 1 determines whether a learning step it would like to perform to improve the operation of the machine 5 is a high or low risk learning step. A high-risk learning step is a learning step which would expose the machine 5 to a high risk if it was performed on the real physical machine (in the real-time environment). The low risk learning step is a learning step which would expose the machine 5 to a low risk if it was performed on the real physical machine (in the real-time environment).

It is preferable to avoid exposing the machine 5 to a high risk as this may destroy the machine 5. For example, if the learning step includes a testing of the machine 5 in which several dangerous chemicals are mixed together, there could be a risk of explosion and the learning test should not be performed on the real machine 5 in this case.

Thus, if the learning step is a high-risk learning step, it is performed using the AI-G application 10 (step S30). The risky processes are simulated using the digital twin 6 rather than being tested on the machine 5, thereby protecting the machine 5.

In a step S32, the AI-G application 10 determines whether the tested processes indeed expose the machine 5 to a high risk or if they can be optimized to reduce the risk for the machine 5. If an optimization which only exposes the machine 5 to a low risk is found, the resulting second modification data MD2 is sent to the AI-R application 9 in a step S34 as already described previously. Alternatively, if no optimization which exposes the machine 5 to a low risk is found, this result is stored in a storage unit in step S33.

On the other hand, for low-risk learning processes, the learning is directly initiated on the AI-R application 9 in step S35. The AI-R application 9 executes the steps S1, S2, S6 and S7 previously described. In particular, the control data CD is modified based on the first modification data MD1 obtained as a result of the learning process.

In a step S37, the AI-R application 9 tests the usefulness of the first modification data MD1 by controlling the machine 5 with the control data CD modified as a function of the first modification data MD1. Depending on the machine data PD resulting from this test operation, the AI-R application 9 determines whether the first modification data MD1 are useful (success) or not in a step S38. In they are determined to be useful, the digital twin 6, in particular the virtual control application 7 generating the virtual control data VCD, is updated in a step S39. Otherwise, the first modification data MD1 are stored in the storage unit (step S33).

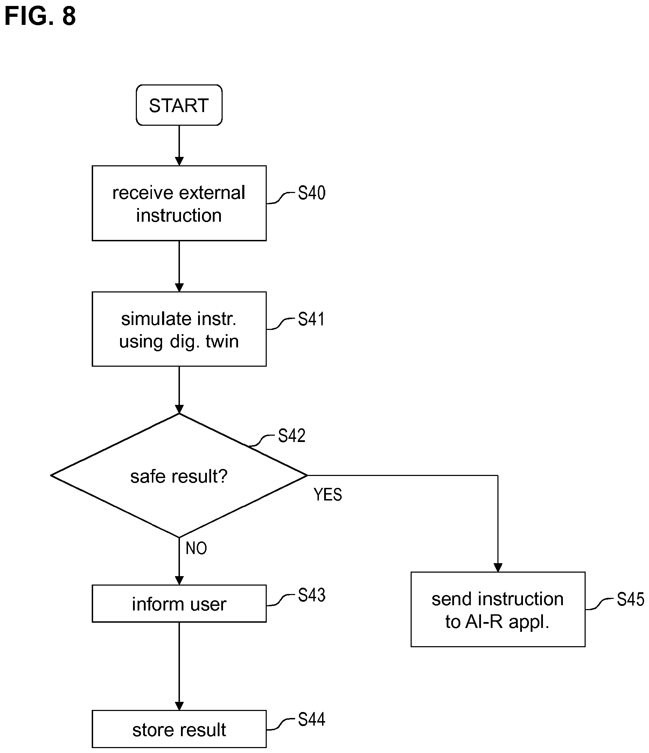

Fig. 8 shows an example of a method for verifying received instructions. Said method can be part of the methods for operating the IPC device 1 described in view of Fig. 2 and 3.

The received instructions are instructions relating to the control data CD which are received by the IPC device 1 from a user or an external device such as a cloud in a step S40 of Fig. 8. Before the received instructions are carried out by implementing them in the control data CD, they are verified by the IPC device 1 to avoid an inappropriate operation of the machine 5.

This verification includes, in a step S41, the simulation of the instructions using the digital twin 6. In detail, the digital twin 6 simulates the operation of the machine 5 controlled in accordance with the received instructions.

In a step S42, the AI-G application 10 determines, based on the result of the simulation, whether the operation of the machine 5 in accordance with the received instructions is safe and complies with other requirements. If it is determined that the received instructions are safe and comply with all requirements, the received instructions are forwarded to the AI-R application 9 for use in the real system with the real machine 5 in a step S45. Otherwise, if it is determined that the received instructions are not safe and/or do not comply with all requirements, the user of the IPC device 1 is informed via an alarm in a step S43 and the result of the simulation is stored in the storage unit in a step S44. The above method thus allows a verification of received instructions to guarantee the safety of the machine 5.

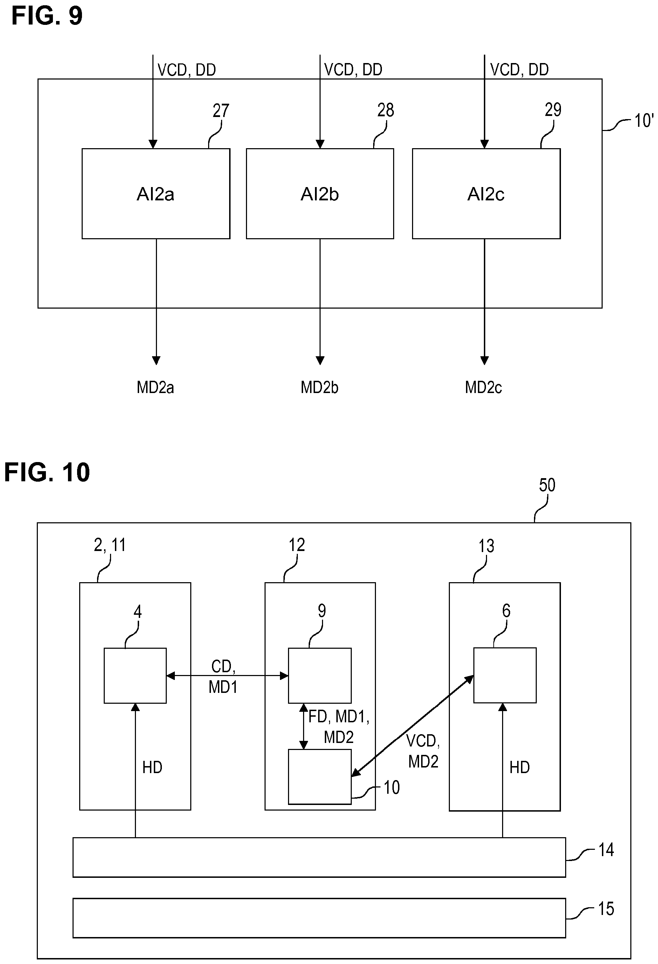

Fig. 9 shows an example of an AI-G application 10'. The AI-G application 10' can replace the AI-G application 10 of the IPC device 1. The AI-G application 10' comprises three sub-applications 27 - 29, which are each capable of executing a different second AI algorithm AI2a, AI2b and AI2c. The AI algorithm AI2a is a neural network algorithm, the AI algorithm AI2b is an algorithm relying on decision trees and the AI algorithm AI2c is a nearest-neighbor algorithm.

Each of the sub-applications 27 - 29 receives the virtual control data VDC and the digital twin data DD as an input for its AI algorithm AI2a - AI2c and provides a second modification result MD2a - MD2c as an output. The second modification results MD2a - MD2c can directly correspond to the previously described second modification data MD2 of the AI-G application 10. Alternatively, the AI-G application 10' may combine the second modification results MD2a -MD2c such as to form the second modification data MD2 based on which the control data CD and/or the virtual control data VCD is modified. The use of different AI algorithms AI2a - AI2c is useful as it allows a better and faster optimization of the control data CD.

Fig. 10 shows a second embodiment of an IPC device 50. The IPC device 50 differs from the IPC device 1 of the first embodiment in that the RTOS 2 is provided on a first virtual machine 11, the AI-R application 9 and the AI-G application 10 are provided on a second virtual machine 12 and the GPOS 3 is provided on a third virtual machine 13. The virtual machines 11, 12, 13 are virtually separated from one another through a hypervisor unit 14. The hypervisor unit 14 provides the respective virtual machines 11 - 13 with hypervisor data HD and separates them from hardware components 15 of the IPC device 50.

The components of the IPC device 50 have the same functions as those described above in view of the IPC device 1. In particular, the IPC device 50 is capable of being operated according to the methods described above, in particular according to the methods of Fig. 2 and 3.

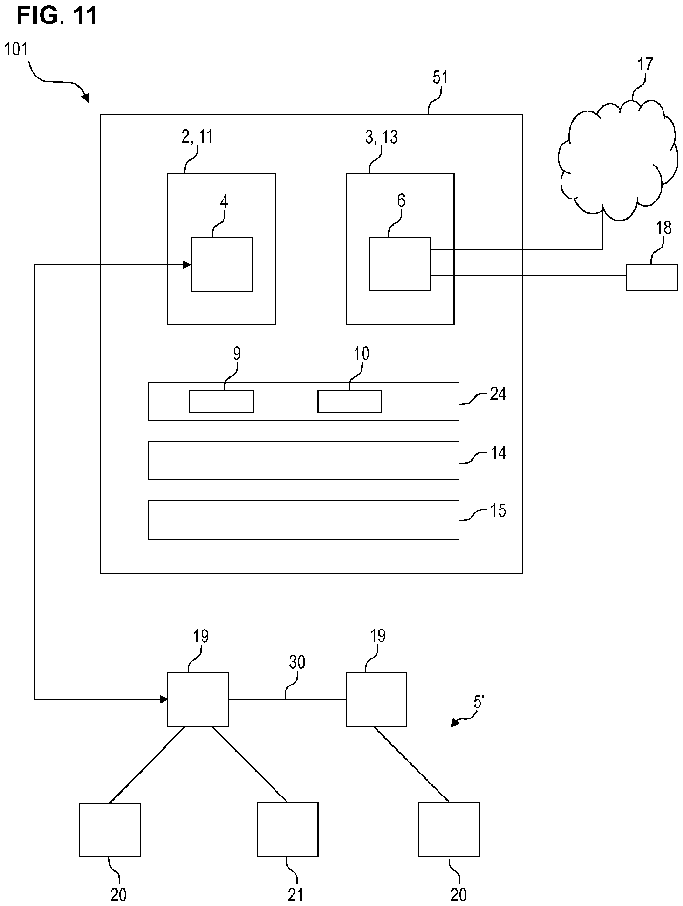

Fig. 11 shows a factory system 101 according to a second embodiment. The factory system 101 comprises a physical factory device 5', an IPC device 51 according to a third embodiment for controlling the physical factory device 5', a cloud 17 and a human-machine interface (HMI) 18.

The physical factory device 5' includes two master devices 19 connected via a bus 30 and controlling the operation of two sensors 20 and an actuator 21. The IPC device 51 according to the third embodiment differs from the IPC device 50 according to the second embodiment in that the AI-R application 9 and the AI-G application 10 are provided on an extension card 24 rather than in the virtual machine 12. Apart from that, the IPC device 51 is identical to the IPC device 50 and can perform identical functions, and in particular be executed according to the methods of Fig. 2 and 3.

In the factory system 101 of Fig. 11, the digital twin 6 can receive data from the cloud 17 and from the user through the HMI 18. This data can for example be used to update the digital twin 6 and/or the virtual control data VCD. In addition, the cloud 17 can correspond to the storage unit described previously to which non-useful second modification data MD2 gets stored. The digital twin 6 may further send out alarms or the like to the user via the HMI 18.

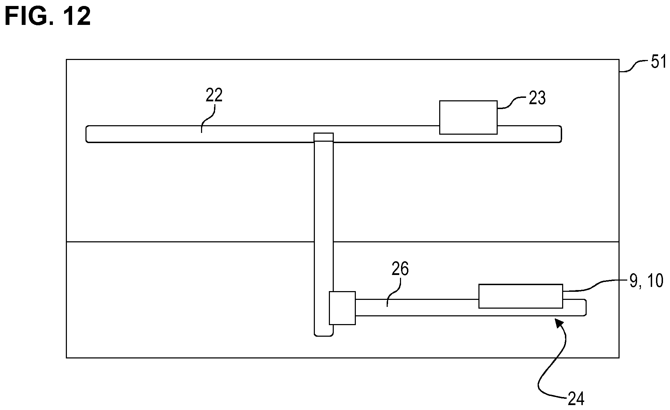

Fig. 12 shows a more detailed view of the IPC device 51. Said IPC device 51 includes a main IPC board 22 comprising a main processor 23. Further, the extension card 24 comprises a card board 26 on which the AI-R application 9 and the AI-G application 10 are located and a connector 25 for connecting the card board 26 to the main board 22. The extension card 24 is a removable card which can be removably inserted into a slot of the IPC device 51 to provide it with the AI-R application 9 and the AI-G application 10 and their parallel learning functionalities.

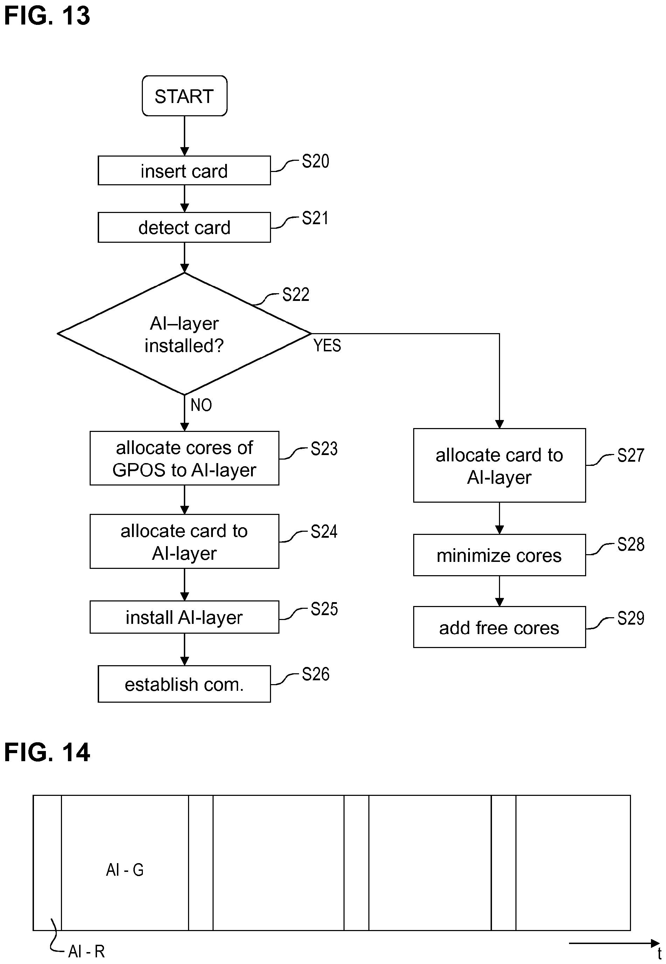

Fig. 13 shows an example of a method for installing AI-R and AI-G applications 9, 10 into the IPC device 51. In a step S20, the extension card 24 is inserted into the IPC device 51. The hypervisor unit 14 detects the presence of the extension card 24 in a subsequent step S21. The hypervisor unit 14 determines, in a step S22, whether an AI-layer 16 (not shown) is installed. The AI-layer 16 is a layer that handles the allocation of the extension card 24 and facilitates an efficient changeover between the AI-R application 9 and the AI-G application 10. An example of such an allocation is shown in Fig. 14.

If an AI-layer 16 is installed, the extension card 24 is allocated to the AI-layer 16 in a step S27. Then, in a step S28, the hypervisor unit 14 minimizes the number of cores of the IPC device 51 allocated to the AI-layer 16. If there are any free cores, the hypervisor unit 14 adds these to the RTOS 2 and/or the GPOS 3 in a step S29.

Alternatively, if no AI-layer 16 is installed, the hypervisor unit 14 allocates some of the cores of the GPOS 3 to the AI-layer 16 in a step S23. Then, in a step S24, the hypervisor unit 14 allocates the extension card 24 to the AI-layer 16. In a step S25, the AI-layer 16 is installed. Then, in a step S26, the hypervisor unit establishes the communication between the AI-layer 16 and the RTOS 2 and GPOS 3.

Although the present invention has been described in accordance with preferred embodiments, it is obvious for the person skilled in the art that modifications are possible in all embodiments. For example, the first and second AI algorithms can be two different AI algorithms such as neural network and decision tree algorithms. Beyond that, the functions modified and/or optimized by the first and second AI algorithms AI1, AI2 and/or by the plurality of second AI algorithms AI2a - AI2c can be different and include predictive control of the physical factory device or predictive maintenance of the physical factory device, for example.

### REFERENCE NUMERALS

- 1: IPC device
- 2: RTOS
- 3: GPOS
- 4: control application
- 5, 5': physical factory device
- 6: digital twin
- 7: virtual control application
- 8: simulation application
- 9: AI-R application
- 10, 10': AI-G application
- 11 - 13: virtual machine
- 14: hypervisor unit
- 15: hardware components
- 16: AI-layer
- 17: cloud
- 18: human machine interface
- 19: master device
- 20: sensor
- 21: actuator
- 22: main IPC board
- 23: main processor
- 24: extension card
- 25: connector
- 26: card board
- 27 - 29: sub-application
- 30: bus
- 50, 51: IPC device
- 100: factory system
- 101: factory system
- AI1: first artificial intelligence algorithm
- AI2: second artificial intelligence algorithm
- AI2a - AI2c: second artificial intelligence algorithm
- CD: control data
- DD: digital twin data
- FD: feedback data
- HD: hypervisor data
- MD1: first modification data
- MD2: second modification data
- MD2a - MD2c: second modification data
- P₁, P₂: parameter
- PD: physical factory device data
- VCD: virtual control data
- S1 - S15: method step
- S20 - S45: method step

## Claims

1. An industrial PC (IPC) device (1, 50, 51) comprising means for executing:
a real time operating system (RTOS) (2);
a general-purpose operating system (GPOS) (3);
a control application (4) running within the RTOS (2) for generating control data (CD) and controlling an operation of a physical factory device (5) in accordance with the generated control data (CD);
a digital twin (6) running within the GPOS (3) for providing a digital copy of the physical factory device (5) including a virtual control application (7) for generating virtual control data (VCD) and a simulation application (8) for simulating an operation of the physical factory device (5) when it is controlled with the virtual control data (VCD) using the digital twin (6);
a real-time artificial intelligence (AI-R) application (9) interacting with the control application (4) for executing a first artificial intelligence algorithm (AI1), the first artificial intelligence algorithm (AI1) receiving physical factory device data (PD) and the control data (CD) as an input and providing first modification data (MD1) as an output, wherein the physical factory device data (PD) includes data indicative of the operation of the physical factory device (5), and wherein the control application (4) is configured to modify the control data (CD) as a function of the first modification data (MD1); and
a general-purpose artificial intelligence (AI-G) application (10) interacting with the digital twin (6) for executing a second artificial intelligence algorithm (AI2), the second artificial intelligence algorithm (AI2) using digital twin data (DD) and the virtual control data (VCD) as an input and providing second modification data (MD2) as an output, wherein the digital twin data (DD) includes data indicative of the simulation of the physical factory device (5) using the digital twin (6), and wherein the virtual control application (7) is configured to modify the virtual control data (VCD) as a function of the second modification data (MD2).

2. The IPC device according to claim 1, wherein
the AI-G application (10) is further configured to transmit the second modification data (MD2) to the AI-R application (9);
the AI-R application (9) is further configured to provide at least part of the received second modification data (MD2) to the control application (4) and/or to reject the second modification data (MD2); and
the control application (4) is configured to modify the control data (CD) as a function of at least part of the second modification data (MD2).

3. The IPC device according to claim 2, wherein the AI-R application (9) is further configured to send feedback data (FD) to the AI-G application (10) indicative of whether the second modification data (MD2) was partially used to modify the control data (CD), entirely used to modify the control data (CD) and/or rejected.

4. The IPC device according to any one of claims 1 to 3, wherein the simulation application (8) is further configured to simulate an operation of the physical factory device (5) when it is controlled with the modified virtual control data (VCD) using the digital twin (6), and the AI-G application (10) is further configured to determine whether the second modification data (MD2) should be transmitted to the AI-R application (9) based on a result of the simulation of the operation of the physical factory device (5) when it is controlled with the modified virtual control data (VCD) using the digital twin (6).

5. The IPC device according to any one of claims 1 to 4, wherein the AI-G application (10) is further configured to modify the digital twin (6) so as to better represent the physical factory device (5) based on the feedback data (FD) and/or based on the first modification data (MD1).

6. The IPC device according to any one of claims 1 to 5, wherein the AI-R application (9) and/or the AI-G application (10) are provided on an extension card (24) that is inserted into a slot of the IPC device (1, 50, 51), preferably on a PCI express card.

7. The IPC device according to any one of claims 1 to 6, comprising two separate learning cycles for modifying the operation of the physical factory device (5), one of the learning cycles being executed in interaction with the RTOS (2) using the AI-R application (9) so as to comply with industrial real-time operation requirements, and the other learning cycle being executed in interaction with the GPOS (3) using the AI-G application (10) independently from the industrial real-time requirements.

8. The IPC device according to any one of claims 1 to 7, wherein the first artificial intelligence algorithm (AI1) is a low risk artificial intelligence algorithm which provides first modification data (MD1) that exposes the physical factory device (5) controlled by control data (CD) modified as a function of the first modification data (MD1) to a low risk, and wherein the second artificial intelligence algorithm (AI2) is a high risk artificial intelligence algorithm which provides second modification data (MD2) that exposes the digital twin (6) simulating the physical factory device (5) controlled by control data (CD) modified as a function of the second modification data (MD2) to a high risk.

9. The IPC device according to any one of claims 1 to 8, wherein the control application (4) is configured to:
incrementally partially modify the control data (CD) as a function of the first and/or second modification data (MD1, MD2) by performing a partial modification of the control data (CD), in which the control data (CD) is only partially modified as a function of the first and/or second modification data (MD1, MD2);
determine whether the physical factory device data (PD) of the physical factory device (5) controlled with the partially modified control data (CD) is located within an allowable range;
if it determines that the physical factory device data (PD) of the physical factory device (5) controlled with the partially modified control data (CD) is located within an allowable range, repeating the steps of partially modifying the control data (CD) and of determining whether the physical factory device data (PD) of the physical factory device (5) controlled with the partially modified control data (CD) is located within an allowable range until the control data (CD) has been entirely modified as a function of the first and/or second modification data (MD1, MD2).

10. The IPC device according to claim 9, wherein the control application (4) is configured to restart the modification of the control data (CD) as a function of the first and/or second modification data (MD1, MD2) differently from an initial modification of the control data (CD) as a function of the first and/or second modification data (MD1, MD2) if the control application (4) determines that the physical factory device data (PD) of the physical factory device (5) controlled with the partially modified control data (CD) is located outside of the allowable range during the initial modification.

11. The IPC device according to any one of claims 1 to 10, wherein:
the virtual control application (7) is configured to generated virtual control data (VCD) as a function of a received instruction received by the IPC device (1, 50, 51);
the simulation application (8) is configured to simulate the physical factory device (5) controlled with the virtual control data (VCD) generated as a function of the received instruction using the digital twin (6); and
the virtual control application (7) is configured to determine whether the received instruction is safe based on a result of the simulation of the physical factory device (5) controlled with the virtual control data (VCD) generated as a function of the received instruction from the simulation application (8).

12. The IPC device according to any one of claims 1 to 11, wherein the AI-G application (10) comprises a plurality of sub-applications (27 - 29) each configured to use a different artificial intelligence algorithm (AI2a - AI2c) to provide second modification results (MD2a - MD2c).

13. The IPC device according to claim 12, wherein the AI-G application (10) is configured to combine at least some of the second modification results (MD2a - MD2c) provided by the plurality of sub-applications (27 - 29) to generate second modification data (MD2) and to transmit the second modification data (MD2) to the AI-R application (9).

14. The IPC device according to any one of claims 1 to 13, wherein the first and second artificial intelligence algorithms (AI1, AI2) are different artificial intelligence algorithms.

15. The IPC device according to any one of claims 1 to 14, wherein the first and second artificial intelligence algorithms (AI1, AI2) are used to generate first and second modification data (MD1, MD2) relating to different functions of the physical factory device (5), the functions including at least one of: a predictive maintenance of the physical factory device (5) providing a prediction about a maintenance of the physical factory device (5), a predictive control providing a prediction about a control of the physical factory device (5), an overall equipment effectiveness and/or a power efficiency prediction providing a prediction about the power efficiency of the physical factory device (5).

16. The IPC device according to any one of claims 1 to 15, further comprising a hypervisor unit for virtually separating the GPOS (3) and the RTOS (2).

17. The IPC device according to claim 16, comprising a further operating system virtually separated from the GPOS (3) and the RTOS (2) through the hypervisor unit, wherein the AI-G application (10) and the AI-R application (9) are running inside the further operating system.

18. The IPC device according to claim 6 and to claim 16 or 17, wherein the extension card (24) is configured to communicate with the RTOS (2) and the GPOS (3) through the hypervisor unit.

19. A factory system (100, 101) comprising the IPC device (1, 50, 51) according to any one of claims 1 to 18 and a physical factory device (5) controlled by the IPC device (1, 50, 51).

20. A method for operating an industrial PC (IPC) device comprising means for executing a real time operating system (RTOS) (2) and a general-purpose operating system (GPOS) (3), the method comprising:
generating (S1) control data (CD) using a control application (4) running within the RTOS;
controlling (S2) an operation of a physical factory device (5) in accordance with the generated control data (CD) using the control application (4);
providing (S3) a digital copy of the physical factory device (5) as a digital twin (6) running within the GPOS (3) including a virtual control application (7) and a simulation application (8);
generating (S4) virtual control data (VCD) using the virtual control application (7);
simulating (S5) an operation of the physical factory device (5) using the simulation application (8) when it is controlled with the virtual control data (VCD);
executing (S6) a first artificial intelligence algorithm (AI1) using a real-time artificial intelligence (AI-R) application (9) interacting with the control application (4), the first artificial intelligence algorithm (AI1) receiving physical factory device data (PD) and the control data (CD) as an input and providing first modification data (MD 1) as an output, wherein the physical factory device data (PD) includes data indicative of the operation of the physical factory device (5);
modifying (S7) the control data (CD) as a function of the first modification data (MD1):
executing (S8) a second artificial intelligence algorithm (AI2) using a general-purpose artificial intelligence (AI-G) application (10) interacting with the digital twin (6), the second artificial intelligence algorithm (AI2) using digital twin data (DD) and the virtual control data (VCD) as an input and providing second modification data (MD2) as an output, wherein the digital twin data (DD) includes data indicative of the simulation of the physical factory device (5) using the digital twin (6); and
modifying (S9) the virtual control data (VCD) as a function of the second modification data (MD2).

## Patentansprüche

1. Industrielle PC (IPC)-Vorrichtung (1, 50, 51), die Mittel aufweist zum Ausführen:
eines Echtzeitbetriebssystems (RTOS) (2);
eines Allzweckbetriebssystems (GPOS) (3);
einer Steueranwendung (4), die innerhalb des RTOS (2) läuft, um Steuerdaten (CD) zu erzeugen und einen Betrieb einer physikalischen Fabrikvorrichtung (5) in Übereinstimmung mit den erzeugten Steuerdaten (CD) zu steuern;
eines digitalen Zwillings (6), der innerhalb des GPOS (3) läuft, um eine digitale Kopie der physikalischen Fabrikvorrichtung (5) bereitzustellen, und eine virtuelle Steueranwendung (7) zum Erzeugen virtueller Steuerdaten (VCD) und eine Simulationsanwendung (8) zum Simulieren eines Betriebs der physikalischen Fabrikvorrichtung (5), wenn diese mit den virtuellen Steuerdaten (VCD) unter Verwendung des digitalen Zwillings (6) gesteuert wird, aufweist;
einer Echtzeitanwendung der künstlichem Intelligenz (AI-R-Anwendung) (9), die mit der Steueranwendung (4) interagiert, um einen ersten Algorithmus der künstlichen Intelligenz (AI1) auszuführen, wobei der erste Algorithmus der künstlichen Intelligenz (AI1) physikalische Fabrikvorrichtungsdaten (PD) und die Steuerdaten (CD) als eine Eingabe empfängt und erste Modifikationsdaten (MD 1) als Ausgabe bereitstellt, wobei die physikalischen Fabrikvorrichtungsdaten (PD) Daten enthalten, die den Betrieb der physikalischen Fabrikvorrichtung (5) angeben, und wobei die Steueranwendung (4) geeignet, die Steuerdaten (CD) in Abhängigkeit von den ersten Modifikationsdaten (MD1) zu modifizieren; und
einer Allzweckanwendung der künstlichen Intelligenz (AI-G-Anwendung) (10), die mit dem digitalen Zwilling (6) interagiert, um einen zweiten Algorithmus der künstlichen Intelligenz (AI2) auszuführen, wobei der zweite Algorithmus der künstlichen Intelligenz (AI2) digitale Zwillingsdaten (DD) und die virtuellen Steuerdaten (VCD) als Eingabe verwendet und zweite Modifikationsdaten (MD2) als Ausgabe bereitstellt, wobei die digitalen Zwillingsdaten (DD) Daten enthalten, die die Simulation der physikalischen Fabrikvorrichtung (5) unter Verwendung des digitalen Zwillings (6) anzeigen, und wobei die virtuelle Steueranwendung (7) geeignet ist, die virtuellen Steuerdaten (VCD) in Abhängigkeit von den zweiten Modifikationsdaten (MD2) zu modifizieren.

2. IPC-Vorrichtung nach Anspruch 1, wobei
die AI-G-Anwendung (10) ferner geeignet ist, die zweiten Modifikationsdaten (MD2) an die AI-R-Anwendung (9) zu übermitteln;
die AI-R-Anwendung (9) ferner geeignet ist, zumindest einen Teil der empfangenen zweiten Modifikationsdaten (MD2) an die Steueranwendung (4) weiterzuleiten und/oder die zweiten Modifikationsdaten (MD2) zurückzuweisen; und
die Steueranwendung (4) geeignet ist, die Steuerdaten (CD) in Abhängigkeit von mindestens einem Teil der zweiten Modifikationsdaten (MD2) zu modifizieren.

3. IPC-Vorrichtung nach Anspruch 2, wobei die AI-R-Anwendung (9) ferner geeignet ist, Rückmeldedaten (FD) an die AI-G-Anwendung (10) zu senden, die angeben, ob die zweiten Modifikationsdaten (MD2) teilweise zur Modifikation der Steuerdaten (CD) verwendet wurden, vollständig zur Modifikation der Steuerdaten (CD) verwendet wurden und/oder zurückgewiesen wurden.

4. IPC-Vorrichtung nach einem der Ansprüche 1 bis 3, wobei die Simulationsanwendung (8) ferner geeignet ist, einen Betrieb der physikalischen Fabrikvorrichtung (5) zu simulieren, wenn diese mit den modifizierten virtuellen Steuerdaten (VCD) unter Verwendung des digitalen Zwillings (6) gesteuert wird, und die AI-G-Anwendung (10) ferner geeignet ist, auf der Grundlage eines Ergebnisses der Simulation des Betriebs der physikalischen Fabrikvorrichtung (5), wenn diese mit den modifizierten virtuellen Steuerdaten (VCD) unter Verwendung des digitalen Zwillings (6) gesteuert wird, zu bestimmen, ob die zweiten Modifikationsdaten (MD2) an die AI-R-Anwendung (9) übertragen werden sollen.

5. IPC-Vorrichtung nach einem der Ansprüche 1 bis 4, wobei die AI-G-Anwendung (10) ferner geeignet ist, auf der Grundlage der Rückkopplungsdaten (FD) und/oder auf der Grundlage der ersten Modifikationsdaten (MD 1) den digitalen Zwilling (6) so zu modifizieren, dass er die physikalische Fabrikvorrichtung (5) besser darstellt.

6. IPC-Vorrichtung nach einem der Ansprüche 1 bis 5, wobei die AI-R-Anwendung (9) und/oder die AI-G-Anwendung (10) auf einer Erweiterungskarte (24) bereitgestellt werden, die in einen Steckplatz der IPC-Vorrichtung (1, 50, 51), vorzugsweise auf einer PCI-Express-Karte, eingesetzt ist.

7. IPC-Vorrichtung nach einem der Ansprüche 1 bis 6, die zwei getrennte Lernzyklen zur Modifizierung des Betriebs der physikalischen Fabrikvorrichtung (5) umfasst, wobei einer der Lernzyklen in Interaktion mit dem RTOS (2) unter Verwendung der AI-R-Anwendung (9) ausgeführt wird, um industriellen Echtzeitbetriebsanforderungen zu entsprechen, und der andere Lernzyklus in Interaktion mit dem GPOS (3) unter Verwendung der AI-G-Anwendung (10) unabhängig von den industriellen Echtzeitanforderungen ausgeführt wird.

8. IPC-Vorrichtung nach einem der Ansprüche 1 bis 7, wobei der erste Algorithmus der künstlichen Intelligenz (AI1) ein Algorithmus der künstlichen Intelligenz mit geringem Risiko ist, der erste Modifikationsdaten (MD 1) bereitstellt, die die physikalische Fabrikvorrichtung (5), die durch in Abhängigkeit von den ersten Modifikationsdaten (MD 1) modifizierte Steuerdaten (CD) gesteuert wird, einem geringen Risiko aussetzen, und wobei der zweite Algorithmus der künstlichen Intelligenz (AI2) ein Algorithmus der künstlichen Intelligenz mit hohem Risiko ist, der zweite Modifikationsdaten (MD2) bereitstellt, die den digitalen Zwilling (6), der die physikalische Fabrikvorrichtung (5) simuliert, die durch als Funktion der zweiten Modifikationsdaten (MD2) modifizierte Steuerdaten (CD) gesteuert wird, einem hohen Risiko aussetzen.

9. IPC-Vorrichtung nach einem der Ansprüche 1 bis 8, wobei die Steueranwendung (4) geeignet ist:
die Steuerdaten (CD) in Abhängigkeit von den ersten und/oder zweiten Modifikationsdaten (MD1, MD2) inkrementell teilweise zu modifizieren, indem eine Teilmodifikation der Steuerdaten (CD) durchgeführt wird, bei der die Steuerdaten (CD) nur teilweise in Abhängigkeit von den ersten und/oder zweiten Modifikationsdaten (MD1, MD2) modifiziert werden;
zu bestimmen, ob die physikalischen Fabrikvorrichtungsdaten (PD) der physikalischen Fabrikvorrichtung (5), die mit den teilweise modifizierten Steuerdaten (CD) gesteuert wird, innerhalb eines zulässigen Bereichs liegen;
wenn feststellt wird, dass die physikalischen Fabrikvorrichtungsdaten (PD) der physikalischen Fabrikvorrichtung (5), die mit den teilweise modifizierten Steuerdaten (CD) gesteuert wird, innerhalb eines zulässigen Bereichs liegen, die Schritte des teilweisen Modifizierens der Steuerdaten (CD) und des Bestimmens, ob die physikalischen Fabrikvorrichtungsdaten (PD) der physikalischen Fabrikvorrichtung (5), die mit den teilweise modifizierten Steuerdaten (CD) gesteuert wird, innerhalb eines zulässigen Bereichs liegen, zu wiederholen, bis die Steuerdaten (CD) in Abhängigkeit von den ersten und/oder zweiten Modifikationsdaten (MD1, MD2) vollständig modifiziert worden sind.

10. IPC-Vorrichtung nach Anspruch 9, wobei die Steueranwendung (4) geeignet ist, die Modifikation der Steuerdaten (CD) in Abhängigkeit von den ersten und/oder zweiten Modifikationsdaten (MD1, MD2) anders als eine anfängliche Modifikation der Steuerdaten (CD) in Abhängigkeit von den ersten und/oder zweiten Modifikationsdaten (MD1, MD2) neu zu starten, wenn die Steueranwendung (4) feststellt, dass die physikalischen Fabrikvorrichtungsdaten (PD) der physikalischen Fabrikvorrichtung (5), die mit den teilweise modifizierten Steuerdaten (CD) gesteuert wird, während der anfänglichen Modifikation außerhalb des zulässigen Bereichs liegen.

11. IPC-Vorrichtung nach einem der Ansprüche 1 bis 10, wobei:
die virtuelle Steueranwendung (7) geeignet ist, virtuelle Steuerdaten (VCD) in Abhängigkeit von einem von der IPC-Vorrichtung (1, 50, 51) empfangenen Befehl zu erzeugen;
die Simulationsanwendung (8) geeignet ist, die physikalische Fabrikvorrichtung (5) zu simulieren, die mit den virtuellen Steuerdaten (VCD) gesteuert wird, die in Abhängigkeit des empfangenen Befehls unter Verwendung des digitalen Zwillings (6) erzeugt werden; und
die virtuelle Steueranwendung (7) geeignet ist, auf der Grundlage eines Ergebnisses der Simulation der physikalischen Fabrikvorrichtung (5), die mit den virtuellen Steuerdaten (VCD) gesteuert wird, die als Funktion des empfangenen Befehls von der Simulationsanwendung (8) erzeugt werden, zu bestimmen, ob der empfangene Befehl sicher ist.

12. IPC-Vorrichtung nach einem der Ansprüche 1 bis 11, wobei die AI-G-Anwendung (10) mehrere Unteranwendungen (27 - 29) umfasst, die jeweils geeignet sind, einen unterschiedlichen Algorithmus der künstlichen Intelligenz (AI2a - AI2c) zu verwenden, um zweite Modifikationsergebnisse (MD2a - MD2c) zu liefern.

13. IPC-Vorrichtung nach Anspruch 12, wobei die AI-G-Anwendung (10) geeignet ist, zumindest einige der zweiten Modifikationsergebnisse (MD2a - MD2c), die von den mehreren Unteranwendungen (27 - 29) bereitgestellt werden, zu kombinieren, um zweite Modifikationsdaten (MD2) zu erzeugen und die zweiten Modifikationsdaten (MD2) an die AI-R-Anwendung (9) zu übertragen.

14. IPC-Vorrichtung nach einem der Ansprüche 1 bis 13, wobei der erste und der zweite Algorithmus der künstlichen Intelligenz (AI1, AI2) unterschiedliche Algorithmen der künstlichen Intelligenz sind.

15. IPC-Vorrichtung nach einem der Ansprüche 1 bis 14, wobei der erste und der zweite Algorithmus der künstlichen Intelligenz (AI1, AI2) verwendet werden, um erste und zweite Modifikationsdaten (MD1, MD2) zu erzeugen, die sich auf unterschiedliche Funktionen der physikalischen Fabrikvorrichtung (5) beziehen, wobei die Funktionen mindestens eine der folgenden Funktionen umfassen: eine prädiktive Wartung der physikalischen Fabrikvorrichtung (5), die eine Vorhersage über eine Wartung der physikalischen Fabrikvorrichtung (5) liefert, eine prädiktive Steuerung, die eine Vorhersage über eine Steuerung der physikalischen Fabrikvorrichtung (5) liefert, eine Gesamtanlageneffektivität und/oder eine Leistungseffizienzvorhersage, die eine Vorhersage über die Leistungseffizienz der physikalischen Fabrikvorrichtung (5) liefert.

16. IPC-Vorrichtung nach einem der Ansprüche 1 bis 15, die ferner eine Hypervisor-Einheit zur virtuellen Trennung des GPOS (3) und des RTOS (2) umfasst.

17. IPC-Vorrichtung nach Anspruch 16, die ein weiteres Betriebssystem umfasst, das durch die Hypervisor-Einheit virtuell von dem GPOS (3) und dem RTOS (2) getrennt ist, wobei die AI-G-Anwendung (10) und die AI-R-Anwendung (9) innerhalb des weiteren Betriebssystems ausgeführt werden.

18. IPC-Vorrichtung nach Anspruch 6 und nach Anspruch 16 oder 17, wobei die Erweiterungskarte (24) geeignet ist, über die Hypervisor-Einheit mit dem RTOS (2) und dem GPOS (3) zu kommunizieren.

19. Fabriksystem (100, 101) mit der IPC-Vorrichtung (1, 50, 51) nach einem der Ansprüche 1 bis 18 und einer physikalischen Fabrikvorrichtung (5), die von der IPC-Vorrichtung (1, 50, 51) gesteuert wird.

20. Verfahren zum Betreiben einer Industrie-PC (IPC)-Vorrichtung, die Mittel zum Ausführen eines Echtzeitbetriebssystems (RTOS) (2) und eines Allzweckbetriebssystems (GPOS) (3) aufweist, wobei das Verfahren umfasst:
Erzeugen (S1) von Steuerdaten (CD) unter Verwendung einer Steueranwendung (4), die innerhalb des RTOS läuft;
Steuern (S2) eines Betriebs einer physikalischen Fabrikvorrichtung (5) in Übereinstimmung mit den anhand der Steueranwendung (4) erzeugten Steuerdaten (CD);
Bereitstellen (S3) einer digitalen Kopie der physikalischen Fabrikvorrichtung (5) als digitaler Zwilling (6), der innerhalb des GPOS (3) läuft, und eine virtuelle Steueranwendung (7) und eine Simulationsanwendung (8) aufweist;
Erzeugen (S4) von virtuellen Steuerdaten (VCD) unter Verwendung der virtuellen Steueranwendung (7);
Simulieren (S5) eines Betriebs der physikalischen Fabrikvorrichtung (5) unter Verwendung der Simulationsanwendung (8), wenn sie mit den virtuellen Steuerdaten (VCD) gesteuert wird;
Ausführen (S6) eines ersten Algorithmus der künstlichen Intelligenz (AI1) unter Verwendung einer Echtzeitanwendung der künstlichen Intelligenz (AI-R) (9), die mit der Steueranwendung (4) interagiert, wobei der erste Algorithmus der künstlichen Intelligenz (AI1) physikalische Fabrikvorrichtungsdaten (PD) und die Steuerdaten (CD) als eine Eingabe empfängt und erste Modifikationsdaten (MD 1) als eine Ausgabe bereitstellt, wobei die physikalischen Fabrikvorrichtungsdaten (PD) Daten enthalten, die den Betrieb der physikalischen Fabrikvorrichtung (5) angeben;
Modifizieren (S7) der Steuerdaten (CD) in Abhängigkeit von den ersten Modifikationsdaten (MD1);
Ausführen (S8) eines zweiten Algorithmus der künstlichen Intelligenz (AI2) unter Verwendung einer Allzweckanwendung der künstlichen Intelligenz (AI-G) (10), die mit dem digitalen Zwilling (6) interagiert, wobei der zweite Algorithmus der künstlichen Intelligenz (AI2) digitale Zwillingsdaten (DD) und die virtuellen Steuerdaten (VCD) als eine Eingabe verwendet und zweite Modifikationsdaten (MD2) als eine Ausgabe bereitstellt, wobei die digitalen Zwillingsdaten (DD) Daten enthalten, die die Simulation der physikalischen Fabrikvorrichtung (5) unter Verwendung des digitalen Zwillings (6) anzeigen; und
Modifizieren (S9) der virtuellen Steuerdaten (VCD) in Abhängigkeit von den zweiten Modifikationsdaten (MD2).

## Revendications

1. Dispositif (1, 50, 51) de PC industriel (IPC) comprenant des moyens pour exécuter :
un système d'exploitation temps réel (RTOS) (2) ;
un système d'exploitation généraliste (GPOS) (3) ;
une application de commande (4) s'exécutant dans le RTOS (2) pour générer des données de commande (CD) et commander un fonctionnement d'un dispositif d'usine physique (5) conformément aux données de commande (CD) générées ;
un jumeau numérique (6) fonctionnant dans le GPOS (3) pour fournir une copie numérique du dispositif d'usine physique (5) comprenant une application de commande virtuelle (7) pour générer des données de commande virtuelle (VCD) et une application de simulation (8) pour simuler un fonctionnement du dispositif d'usine physique (5) lorsqu'il est commandé avec les données de commande virtuelle (VCD) en utilisant le jumeau numérique (6) ;
une application d'intelligence artificielle en temps réel (AI-R) (9) interagissant avec l'application de commande (4) pour exécuter un premier algorithme d'intelligence artificielle (AI1), le premier algorithme d'intelligence artificielle (AI1) recevant des données de dispositif d'usine physique (PD) et les données de commande (CD) comme entrée et fournissant des premières données de modification (MD 1) comme sortie, dans lequel les données de dispositif d'usine physique (PD) comprennent des données indicatives du fonctionnement du dispositif d'usine physique (5), et dans lequel l'application de commande (4) est configurée pour modifier les données de commande (CD) en fonction des premières données de modification (MD1) ; et
une application d'intelligence artificielle généraliste (AI-G) (10) interagissant avec le jumeau numérique (6) pour exécuter un second algorithme d'intelligence artificielle (AI2), le second algorithme d'intelligence artificielle (AI2) utilisant les données de jumeau numérique (DD) et les données de commande virtuelle (VCD) comme entrée et fournissant des secondes données de modification (MD2) comme sortie, dans lequel les données de jumeau numérique (DD) comprennent des données indicatives de la simulation du dispositif d'usine physique (5) en utilisant le jumeau numérique (6), et dans lequel l'application de commande virtuelle (7) est configurée pour modifier les données de commande virtuelle (VCD) en fonction des secondes données de modification (MD2).

2. Dispositif IPC selon la revendication 1, dans lequel
l'application AI-G (10) est en outre configurée pour transmettre les secondes données de modification (MD2) à l'application AI-R (9) ;
l'application AI-R (9) est en outre configurée pour fournir au moins une partie des secondes données de modification reçues (MD2) à l'application de commande (4) et/ou pour rejeter les secondes données de modification (MD2) ; et
l'application de commande (4) est configurée pour modifier les données de commande (CD) en fonction d'au moins une partie des secondes données de modification (MD2).

3. Dispositif IPC selon la revendication 2, dans lequel l'application AI-R (9) est en outre configurée pour envoyer des données de retour (FD) à l'application AI-G (10) indiquant si les secondes données de modification (MD2) ont été partiellement utilisées pour modifier les données de commande (CD), entièrement utilisées pour modifier les données de commande (CD) et/ou rejetées.

4. Dispositif IPC selon l'une quelconque des revendications 1 à 3, dans lequel l'application de simulation (8) est en outre configurée pour simuler un fonctionnement du dispositif d'usine physique (5) lorsqu'il est commandé avec les données de commande virtuelles modifiées (VCD) en utilisant le jumeau numérique (6), et l'application AI-G (10) est en outre configurée pour déterminer si les secondes données de modification (MD2) doivent être transmises à l'application AI-R (9) sur la base d'un résultat de la simulation du fonctionnement du dispositif d'usine physique (5) lorsqu'il est commandé avec les données de commande virtuelles modifiées (VCD) en utilisant le jumeau numérique (6).

5. Dispositif IPC selon l'une quelconque des revendications 1 à 4, dans lequel l'application AI-G (10) est en outre configurée pour modifier le jumeau numérique (6) de manière à mieux représenter le dispositif d'usine physique (5) sur la base des données de retour (FD) et/ou sur la base des premières données de modification (MD1).

6. Dispositif IPC selon l'une quelconque des revendications 1 à 5, dans lequel l'application AI-R (9) et/ou l'application AI-G (10) sont fournies sur une carte d'extension (24) qui est insérée dans un emplacement du dispositif IPC (1, 50, 51), de préférence sur une carte PCI express.

7. Dispositif IPC selon l'une quelconque des revendications 1 à 6, comprenant deux cycles d'apprentissage distincts pour modifier le fonctionnement du dispositif physique d'usine (5), l'un des cycles d'apprentissage étant exécuté en interaction avec le RTOS (2) à l'aide de l'application AI-R (9) de manière à respecter les exigences de fonctionnement en temps réel industriel, et l'autre cycle d'apprentissage étant exécuté en interaction avec le GPOS (3) à l'aide de l'application AI-G (10) indépendamment des exigences de temps réel industriel.

8. Dispositif IPC selon l'une quelconque des revendications 1 à 7, dans lequel le premier algorithme d'intelligence artificielle (AI1) est un algorithme d'intelligence artificielle à faible risque qui fournit des premières données de modification (MD1) qui exposent le dispositif physique d'usine (5) commandé par des données de commande (CD) modifiées en fonction des premières données de modification (MD 1) à un faible risque, et dans lequel le second algorithme d'intelligence artificielle (AI2) est un algorithme d'intelligence artificielle à haut risque qui fournit des secondes données de modification (MD2) qui exposent le jumeau numérique (6) simulant le dispositif d'usine physique (5) commandé par des données de commande (CD) modifiées en fonction des secondes données de modification (MD2) à un risque élevé.

9. Dispositif IPC selon l'une quelconque des revendications 1 à 8, dans lequel l'application de commande (4) est configurée pour :
modifier partiellement de manière incrémentielle les données de commande (CD) en fonction des premières et/ou secondes données de modification (MD1, MD2) en effectuant une modification partielle des données de commande (CD), dans laquelle les données de commande (CD) ne sont que partiellement modifiées en fonction des premières et/ou secondes données de modification (MD1, MD2) ;
déterminer si les données de dispositif d'usine physique (PD) du dispositif d'usine physique (5) commandé avec les données de commande (CD) partiellement modifiées sont situées dans une plage admissible ;
s'il est déterminé que les données de dispositif d'usine physique (PD) du dispositif d'usine physique (5) commandé avec les données de commande partiellement modifiées (CD) sont situées dans une plage admissible, répéter les étapes de modification partielle des données de commande (CD) et de détermination si les données de dispositif d'usine physique (PD) du dispositif d'usine physique (5) commandé avec les données de commande partiellement modifiées (CD) sont situées dans une plage admissible jusqu'à ce que les données de commande (CD) aient été entièrement modifiées en fonction des premières et/ou secondes données de modification (MD1, MD2).

10. Dispositif IPC selon la revendication 9, dans lequel l'application de commande (4) est configurée pour redémarrer la modification des données de commande (CD) en fonction des premières et/ou secondes données de modification (MD1, MD2) différemment d'une modification initiale des données de commande (CD) en fonction des premières et/ou secondes données de modification (MD1, MD2) si l'application de commande (4) détermine que les données de dispositif d'usine physique (PD) du dispositif d'usine physique (5) commandé avec les données de commande (CD) partiellement modifiées sont situées en dehors de la plage autorisée pendant la modification initiale.

11. Dispositif IPC selon l'une quelconque des revendications 1 à 10, dans lequel
l'application de commande virtuelle (7) est configurée pour générer des données de commande virtuelle (VCD) en fonction d'une instruction reçue par le dispositif IPC (1, 50, 51) ;
l'application de simulation (8) est configurée pour simuler le dispositif d'usine physique (5) commandé avec les données de commande virtuelle (VCD) générées en fonction de l'instruction reçue en utilisant le jumeau numérique (6) ; et
l'application de commande virtuelle (7) est configurée pour déterminer si l'instruction reçue est sûre sur la base d'un résultat de la simulation du dispositif d'usine physique (5) commandé avec les données de commande virtuelle (VCD) générées en fonction de l'instruction reçue de l'application de simulation (8).

12. Dispositif IPC selon l'une quelconque des revendications 1 à 11, dans lequel l'application AI-G (10) comprend plusieurs sous-applications (27 - 29) configurées chacune pour utiliser un algorithme d'intelligence artificielle différent (AI2a - AI2c) pour fournir des seconds résultats de modification (MD2a - MD2c).

13. Dispositif IPC selon la revendication 12, dans lequel l'application AI-G (10) est configurée pour combiner au moins certains des seconds résultats de modification (MD2a - MD2c) fournis par les plusieurs sous-applications (27 - 29) pour générer des secondes données de modification (MD2) et pour transmettre les secondes données de modification (MD2) à l'application AI-R (9).

14. Dispositif IPC selon l'une quelconque des revendications 1 à 13, dans lequel les premier et second algorithmes d'intelligence artificielle (AI1, AI2) sont des algorithmes d'intelligence artificielle différents.

15. Dispositif IPC selon l'une quelconque des revendications 1 à 14, dans lequel les premier et second algorithmes d'intelligence artificielle (AI1, AI2) sont utilisés pour générer des premières et secondes données de modification (MD1, MD2) relatives à différentes fonctions du dispositif d'usine physique (5), les fonctions comprenant au moins une des fonctions parmi : une maintenance prédictive du dispositif d'usine physique (5) fournissant une prédiction concernant une maintenance du dispositif d'usine physique (5), une commande prédictive fournissant une prédiction concernant une commande du dispositif d'usine physique (5), une efficacité globale de l'équipement et/ou une prédiction d'efficacité énergétique fournissant une prédiction concernant l'efficacité énergétique du dispositif d'usine physique (5).

16. Dispositif IPC selon l'une quelconque des revendications 1 à 15, comprenant en outre une unité d'hyperviseur pour séparer virtuellement le GPOS (3) et le RTOS (2).

17. Dispositif IPC selon la revendication 16, comprenant un autre système d'exploitation séparé virtuellement du GPOS (3) et du RTOS (2) par l'unité d'hyperviseur, dans lequel l'application AI-G (10) et l'application AI-R (9) sont exécutées à l'intérieur de l'autre système d'exploitation.

18. Dispositif IPC selon la revendication 6 et la revendication 16 ou 17, dans lequel la carte d'extension (24) est configurée pour communiquer avec le RTOS (2) et le GPOS (3) par l'intermédiaire de l'unité d'hyperviseur.

19. Système d'usine (100, 101) comprenant le dispositif IPC (1, 50, 51) selon l'une quelconque des revendications 1 à 18 et un dispositif d'usine physique (5) commandé par le dispositif IPC (1, 50, 51).

20. Procédé pour faire fonctionner un dispositif de PC industriel (IPC) comprenant des moyens pour exécuter un système d'exploitation en temps réel (RTOS) (2) et un système d'exploitation généraliste (GPOS) (3), le procédé comprenant :
générer (S1) de données de commande (CD) en utilisant une application de commande (4) s'exécutant dans le RTOS ;
commander (S2) un fonctionnement d'un dispositif d'usine physique (5) conformément aux données de commande (CD) générées en utilisant l'application de commande (4) ;
fournir (S3) une copie numérique du dispositif d'usine physique (5) en tant que jumeau numérique (6) fonctionnant dans le GPOS (3) comprenant une application de commande virtuelle (7) et une application de simulation (8) ;
générer (S4) des données de commande virtuelle (VCD) en utilisant l'application de commande virtuelle (7) ;
simuler (S5) un fonctionnement du dispositif d'usine physique (5) en utilisant l'application de simulation (8) lorsqu'il est commandé avec les données de commande virtuelle (VCD) ;
exécuter (S6) un premier algorithme d'intelligence artificielle (AI1) en utilisant une application d'intelligence artificielle en temps réel (AI-R) (9) interagissant avec l'application de commande (4), le premier algorithme d'intelligence artificielle (AI1) recevant des données de dispositif d'usine physique (PD) et les données de commande (CD) comme entrée et fournissant des premières données de modification (MD1) comme sortie, dans lequel les données de dispositif d'usine physique (PD) comprennent des données indicatives du fonctionnement du dispositif d'usine physique (5) ;
modifier (S7) les données de commande (CD) en fonction des premières données de modification (MD1) ;
exécuter (S8) un second algorithme d'intelligence artificielle (AI2) en utilisant une application d'intelligence artificielle généraliste (AI-G) (10) interagissant avec le jumeau numérique (6), le second algorithme d'intelligence artificielle (AI2) utilisant des données de jumeau numérique (DD) et les données de commande virtuelle (VCD) comme entrée et fournissant des secondes données de modification (MD2) comme sortie, dans lequel les données de jumeau numérique (DD) comprennent des données indicatives de la simulation du dispositif d'usine physique (5) en utilisant le jumeau numérique (6) ; et
modifier (S9) les données de commande virtuelle (VCD) en fonction des secondes données de modification (MD2).
